# EUROPEAN PATENT SPECIFICATION

(11) **EP 2 669 533 B1**
(45) Date of publication and mention of the grant of the patent: **07.01.2015**
(21) Application number: 13002751.9
(22) Date of filing: 28.05.2013
(51) Int. Cl.: A47B 57/18, F16B 12/46, F16B 12/50

(54) **Shelving structure, in particular for inner fitting of commercial vans with facilities**
Regalstruktur, insbesondere für die Innenausstattung von Kleintransportern mit Einrichtungen
Structure de rayonnage, notamment pour raccord interne de fourgonnettes commerciales avec des installations

(30) Priority: 30.05.2012 IT MO20120144
(43) Date of publication of application: 04.12.2013
(73) Proprietor: Gema S.r.l., Bisenzio (FI) (IT)
(72) Inventor: Camellini, Giancarlo, 41014 Castelvetro di Modena (MO) (IT)
(74) Representative: Ciapetti, Emilio

(56) References cited:
- WO-A1-2006/027015
- DE-A1- 2 803 055
- FR-A5- 2 216 760

## Description

The present invention relates to a shelving structure, of the type preferably used in the inner fitting of outfitted commercial vans.

In particular, but not exclusively, it can be used for shelvings formed by a plurality of containing elements, vessels or shelves in general, which are Integrally fastened to support uprights at different heights.

In the case of this type of facilities, which form the inner fitting of outfitted commercial vehicles, the important factors are lightness, solidity and the capability of supporting both static loads and dynamic loads, such as those generated normally as a result of the vehicle movement.

Since various materials (small items, tools and utensils, as well as other accessories) are to be transported in a safe and ordered way, it is necessary to use suitable shelvings formed by vessels, drawers or shelves, by means of appropriate connecting and fixing systems, which are capable of withstanding the above mentioned stresses, as well as stresses deriving from the stress tests for possible collisions or crashes of the vehicle (crash test).

In any case, all the various components of the system must be integrally connected, so as to ensure strength of the structure not only during the normal movement caused by the journey, but also in case of impacts, to which the van is subjected due to the uneven road or ground, on which it moves.

It is known that, although each pair of sides forming a substantial part of their vertical structure need a relatively reduced payload capacity, the shelvings for commercial vehicles, unlike the storeroom shelvings, must allow an elevated lateral hold in case of a possible accident or, in any case, they must resist to considerable stresses (during acceleration and braking), to which they are continuously subjected due to the vehicle movement. Obviously, they must also guarantee the safety of the person/s who are inside the van.

Consequently, since they must support and keep all the other elements in their positions in various journey conditions, the shelvings for vans are an important, if not the most important, component.

However, it is not only breaking strength that counts, but also the capability of supporting deformations, consequently, the shelvings adaptability, both in terms of flexibility and fastening to various points of the van. Actually, the fastening means should allow a certain shelving flexibility, yet preventing it from detaching from the van inner surfaces.

The simplicity of the structure and its components, together with the weight factor, which affects the stowable useful load (or payload) in an inversely proportional way, must be taken into consideration while making the shelving.

Actually, there are known constructions which, in order to obtain the necessary strength characteristics, use steel for making components, i.e. the sides, that are usually made of folded steel sheet or aluminium sheet or extruded aluminium. Then, vessels, shelves or other elements are fastened and assembled to such sides by means of screws or bolts. The sides are often provided with holes, in which suitable threaded caged nuts are introduced. This system obliges the assembling operators to introduce the caged nuts into the holes in the sides and to be particularly careful not to get wrong while they place them in the shelf left and right side. This makes the assembling operation laborious.

WO 2006/027015 shows a column with an adapter rail so that structural elements of an item of furniture can be assembled. The coupling of the items is made by connecting element like hooks and slots wich allows only positioning said item at a predetermined distance along a vertical direction.

Moreover, known assembling systems, like the just described one, make the whole shelf little rigid longitudinally. This requires very often the use of stiffening elements with real bracing devices which results in inevitable increase of weight, as well as of assembling time and costs.

Consequently, there is the need to define a structure that can be produced and mounted according to a system which does not feature the drawbacks and disadvantages listed previously, or in which such drawbacks and disadvantages are considerably reduced.

Therefore, it is an object of the present invention to provide a shelving structure, of the type used for inner fitting of outfitted commercial vans, according to claim 1, which is characterized by an extremely limited number of components, that can be assembled in a very simple and rapid way, without the necessity for particular devices.

Details of one or more implementations are set forth in the accompanying drawings and in the description hereinbelow of a non exclusive embodiment illustrated by way of non limiting example, in which:

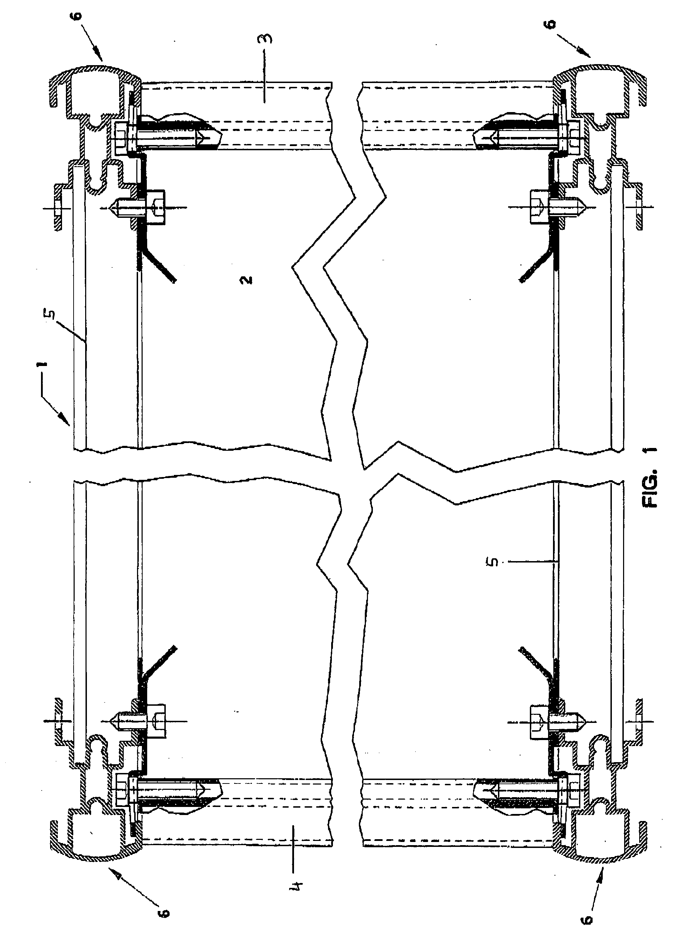

Figure 1 is a schematic plan view, partially in section, taken along a horizontal plane;

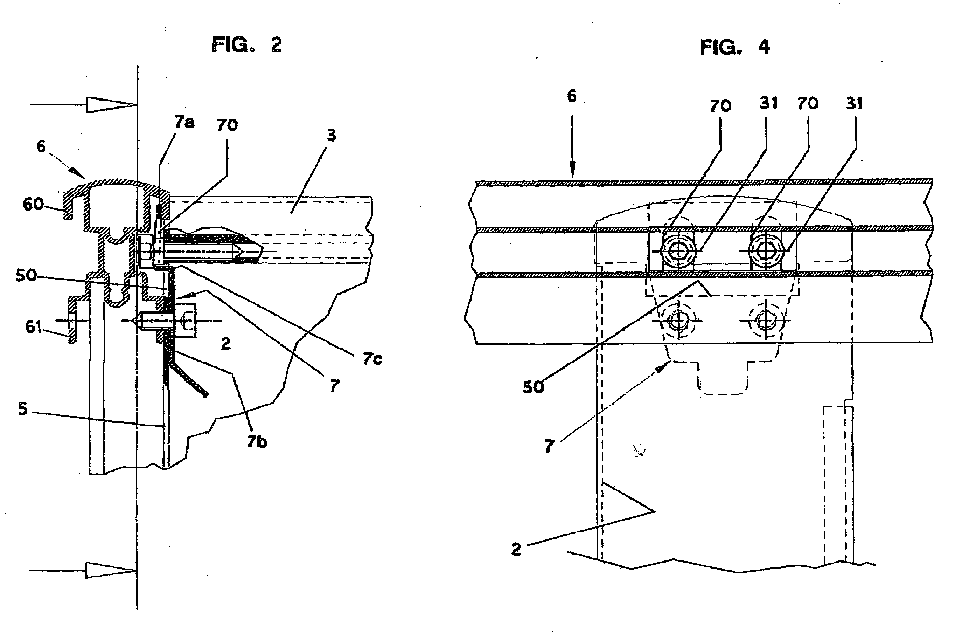

Figure 2 illustrates a part of Figure 1 in enlarged scale;

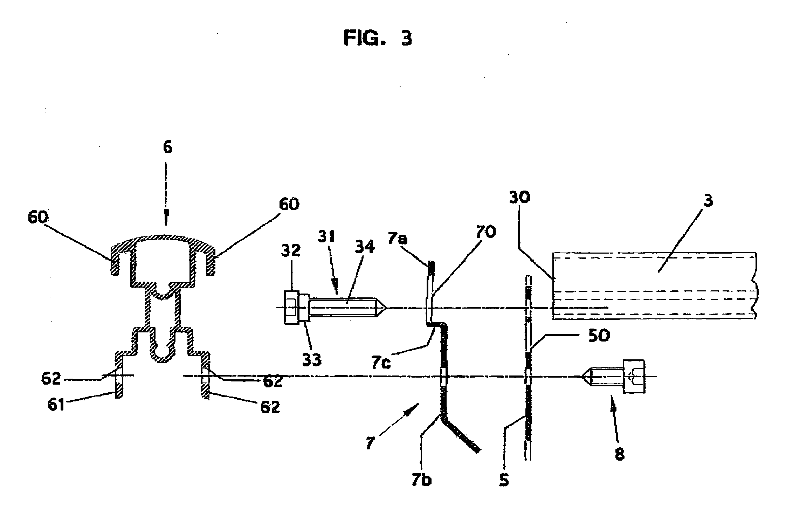

Figure 3 is an exploded view of Figure 2;
Figure 4 is a side view of Figure 2, partially in section along the tracing plane I-I;

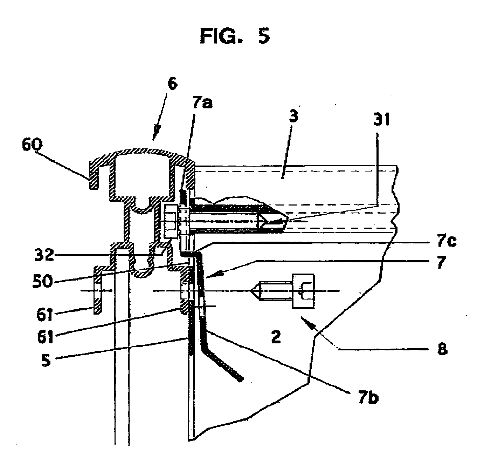

Figure 5 is the same view of Figure 2 in a different configuration.

With reference to the above mentioned figures, reference numeral 1 indicates a vessel or containing element as a whole, used as a shelf in a shelving structure of the type used to obtain the inner fitting of outfitted commercial vans. The shelving structure being examined includes a plurality of containing elements or vessels 1, which are situated at prefixed distances one from another in vertical direction. Each vessel 1 is provided, in its lower part, with a bottom wall 2, from which rise externally a front wall 3, a back wall 4 and two opposite side walls 5.

The vessels 1, that form said plurality, are identical to one another and integrally fastened to support uprights 6 at different heights. In this case, there are four support uprights 6, situated at four corners of the vessels 1.

Each front wall 3 is formed by a piece of section member made of light alloy (of aluminium) and has its opposite ends formed so as to define end contact surfaces 30, parallel to one another and aimed at contacting corresponding portions of surfaces of the opposite side walls 5 and support uprights 6 (at least for the front wall 3) of the shelving structure.

For each of said opposite ends of each front side 3 (and rear side 4), the connection between the vessel 1 and its support upright 6 is made by a connecting bracket 7, in which two portions can be defined and arranged on two different planes. A first, outer portion 7a is aimed at being placed outside of the side wall 5 so as to interact at least with the portion of the support upright 6 facing and contacting a portion of the contact surface 30 of the relative end of the front wall 3

A second, inner portion 7b aimed at being placed inside the side wall 5 in an area, in which the outer side of this wall faces a portion of the outer surface of the support upright 6.

An intermediate folded part 7c of a connecting bracket 7, made of elastically deformable material, is aimed at being freely introduced in a slot 50 made in each side wall 5. The intermediate part 7c connects the first, outer portion 7a, with the second, inner portion 7b.

Suitable means are provided for firmly connecting the second, inner portion 7b, to the respective support upright 6 and side wall 5.

Centring and containing means serve to maintain the first, outer portion 7a in a prefixed position on the end contact surface 30.

More in particular, the second, inner portion 7b, situated in more internal position with respect to the side wall 5, when in its natural configuration, i.e. not firmly fixed contacting the wall 5, has a position, which is not parallel to that of the first, outer portion 7a. Such position defines an inclination, by virtue of which the intersection of the two planes, defined by the first, outer portion 7a and the second, inner portion 7b, is situated, with respect to the folded intermediate part 7c, in the half space containing the first, outer portion 7a.

The centring and containing means aimed at maintaining the first, outer portion 7a in a prefixed position on the end contact surface 30, include at least a gudgeon 31 having a widened head. According to the illustrated embodiment, two parallel gudgeons 31 are provided, each of which is perpendicularly fastened to the end contact surface 30 and has such dimensions as to be perfectly received in a slot 70 made in the first, outer portion 7a.

Each gudgeon 31 has a widened head 32 with dimensions for interacting with a part of the outer surface of the first, outer portion 7a situated at the edge of said slot 70. The diameter of the widened head 32 is larger than the width of the slot 70. The width of the latter is greater than the diameter of the shank portion 33 of the gudgeon 31, which remains protruding from the end contact surface 30 after the introduction has been completed. The shank portion 33 of the gudgeon 31 is longer than the sum of the thicknesses of the side wall 5 and first, outer portion 7a. The shank portion 33 is aimed at pushing firmly the side wall 5 against the end contact surface 30. Fastening is obtained by screwing the threaded portion 34 of the gudgeon 31, which screws into a suitable seat in the front wall 3.

The two gudgeons 31 are identical to each other, parallel and their axes lie in a common vertical plane.

The shape of each slot 70 is elongated in horizontal direction. The two slots 70 are identical to each other, as the respective gudgeons, and aligned in a vertical direction, parallel to the folded intermediate wall 7c.

Each support upright 6 is made of a even square section member, which has, at each of two opposite sides an appendage or fore wing 60, aimed at interacting in contact with a front part of the fore contact surface 30, and an appendage or rear wing 61, aimed at interacting in contact with a part of the outer surface of the side wall 5. The means for stable connection of the second, inner portion 7b to the respective support upright 6 and to the side wall 5, define a stable, tightly "packed" connection of each second, inner portion 7b with the corresponding side wall 5 and the corresponding rear wing 61 by means of tap bolts 8.

One of the ends 7d of the second, inner portion 7b is folded so as to allow gripping in order to introduce and remove the connecting bracket 7.

During the assembly, the two gudgeons 31, introduced in the two slots 70, are screwed in suitable holes in correspondence to each of the surfaces of the portions of the wall 5 leaning on the contact surfaces 30.

After the fore wing 60 and rear wing 61 of the single support upright 6 have been moved closer to the side wall 5, the second, inner portion 7b is tightened and made adhere in matching contact to the inner surface of the side wall 5 by means of tap bolts 8. In order to simplify the operation, in the appendages or rear wings 61 there are rows of small holes 62, in which the tap bolts 8 can be screwed easily and safely.

By contrast, due to the elastic deformability of the connecting bracket 7, the first, outer portion 7a is pushed and kept in matching contact with the portion facing the wing 60 of the support upright 6.

This allows to set the structure at right angle.

Those skilled in the art will understand that the present invention is not limited by what has been in particular illustrated and described previously, since the scope of the invention is defined by the following claims.

## Claims

1. A shelving structure, of the type preferably used for inner fitting of outfitted commercial vans, comprising a plurality of containing elements or vessels (1), which are provided, in their lower part, with a bottom wall (2), along whose perimeter extend a front wall (3), a back wall (4) and two opposite side walls (5), said vessels (1) being integrally fastened to support uprights (6) at different heights **characterized in that** at least each said front wall (3) has opposite ends formed so as to define end contact surfaces (30) parallel to one another and aimed at contacting corresponding portions of surfaces of said opposite side walls (5) and of said support uprights (6);said upright supports (6) being partially fitted within said side walls (5); for each of said opposite ends, the connection between said vessel (1) and its support upright (6) being made by a connecting bracket (7), in which two portions can be defined and arranged on two different planes: a first outer portion (7a) aimed at being placed inside said support upright (6) at the portion of said contact surface (30) where said side wall (5) partially envelopes said support upright (6); a second inner portion (7b) aimed at being placed on an exterior surface of side wall (5) in an area where said support upright (6) is fitted within said side wall (5); each side wall (5) having a slot (50), through which said connecting bracket (7) is aimed at being introduced freely at its folded intermediate part (7c), which connects said first outer portion (7a) with said second inner portion (7b); said slot (50) facing a corresponding aperture of said support upright (6);means being provided for stable connection of the second, inner portion (7b) to the relative support upright (6) and to said side wall (5) and centering and containing means aimed at maintaining said first, outer portion (7a) in a predetermined position on said end contact surface (30).

2. A shelving structure according to claim 1, **characterized in that** said connecting bracket (7) is formed of a resiliently deformable material.

3. A shelving structure according to claim 1, **characterized in that** said second, inner portion (7b), aimed at being placed on an exterior surface of side wall (5) in an area where said support upright (6), in its natural, not assembled configuration, lies in a position not parallel to that of the first, outer portion (7a), which defines an inclination, by virtue of which the intersection of the two planes, defined by the first, outer portion (7a) and the second, inner portion (7b), is situated, with respect to said folded intermediate wall (7c), in the half space containing the first, outer portion (7a).

4. A shelving structure according to claim 1 or 3, **characterized in that** said centring and containing means aimed at maintaining said first, outer portion (7a) in a predetermined position on said end contact surface (30), include at least one gudgeon (31) with widened head, which is fastened perpendicularly to said end contact surface (30) and with such dimensions as to be received perfectly in a slot (70) made in said first, outer portion (7a).

5. A shelving structure according to claim 4, **characterized in that** at least said gudgeon (31) has a widened head (32) with such dimension as to interact with a part of the outer surface of said first, outer portion (7a) situated at the edge of said slot (70).

6. A shelving structure according to claim 4 or 5, **characterized in that** the shape of said slot (50) is elongated in horizontal direction.

7. A shelving structure according to claim 5 or 6, **characterized in that** each said support upright (6) is formed by a section member having an even squared section, which features, at each of two opposite sides, an appendage or fore wing (60), aimed at interacting in contact with a front part of said fore contact surface (30), and an appendage or rear wing (61), aimed at interacting in contact with a part of said outer surface of the side wall (5).

8. A shelving structure according to claim 7, **characterized in that** said means for stable connection of the second, inner portion (7b) to the respective support upright (6) and to said side wall (5), define a stable, tightly "packed" connection of each second, inner portion (7b) with the corresponding side wall (5) and the corresponding rear wing (61), which connection is made in form of a screw.

9. A shelving structure according to any one of the previous claims, **characterized in that** the end (7b) of said second, inner portion (7b) is folded so as to allow gripping.

## Patentansprüche

1. Eine Regalstruktur, die vorzugsweise für die innere Ausstattung der ausgestattet Lieferwagen verwendet wird und die eine Vielzahl von Elementen oder Behälter (1) umfaßt, die in ihrem unteren Teil mit einer Bodenwand (2) vorgesehen sind mit einer Vorderwand (3), eine Rückwand (4) und zwei gegenüberliegenden Seitenwänden (5) entlang des Umfangs der Bodenwand verbunden, wobei der Behälter (1) einstückig mit Stützpfosten (6) in unterschiedlichen Höhen befestigt ist, **dadurch gekennzeichnet, daß** mindestens jeweils der Vorderwand (3) entgegengesetzte Enden hat, die um Stirnkontaktflächen (30) zu definieren parallel zueinander gebildet sind, und die in Kontakt mit entsprechenden Abschnitten von Oberflächen der gegenüberliegenden Seitenwände (5) und der Stützpfosten (6) kommen; wobei für jedes der gegenüberliegenden Enden, die Verbindung zwischen dem Behälter (1) und dessen Stützpfosten (6) durch einen Verbindungsbügel (7), in dem zwei Abschnitte definiert und auf zwei verschiedenen Ebenen angeordnet werden, hergestellt wird: einen ersten äußeren Abschnitt (7a), der in der äußeren Position in Bezug auf die Seitenwand (5) versetzten werden kann, so dass der ersten äußeren Abschnitt zumindest mit dem Teil der Stützpfosten (6), der zur Kontaktfläche (30) der relativen Ende der Vorderwand (3) gerichtet ist, zusammenwirkt; einen zweiten inneren Abschnitt (7b), der in der inneren Position in Bezug auf die Seitenwand (5) versetzten werden kann, in einem Bereich, in dem die äußere Seite dieser Wand zu einen Teil der Außenfläche der Stützpfosten (6) gerichtet ist; wobei jede Seitenwand (5) einen Schlitz (50) hat, durch die der Verbindungsbügel (7) mit ihrem gefalteten Zwischenteil (7c), die die erste Außenabschnitt (7a) mit der zweiten Inneren Abschnitt (7b) verbindet, eingeführten wird; wobei Mittel für eine stabile Verbindung des zweiten, inneren Abschnitt (7b) an dem entsprechenden Stützpfosten (6) und der Seitenwand (5) vorgesehen sind und mit Zentrier- und Aufnahmemitteln zur Aufrechterhaltung des ersten, äußeren Abschnitt (7a) in einer vorgegebenen Position auf der Stirnkontaktfläche (30).

2. Eine Regalstruktur gemäß Anspruch 1, **dadurch gekennzeichnet, daß** der Verbindungsbügel (7) aus einem elastisch verformbaren Material gebildet ist.

3. Eine Regalstruktur gemäß Anspruch 1, **dadurch gekennzeichnet, daß** die zweiten, inneren Abschnitt (7b), der sich am Inneren der Seitenwand (5) befindet, in seiner natürlichen, nicht zusammengebauten Konfiguration, liegt in einer Position, die nicht parallel zu derjenigen der ersten, äußeren Abschnitt (7a), und die eine Neigung definiert, nach denen der Schnittpunkt der beiden Ebenen die durch den ersten, äußeren Abschnitt (7a) und den zweiten, inneren Abschnitt (7b) definiert werden, in bezug der gefaltete Zwischenwand (7c) in den Halbraum, der den ersten, äußeren Abschnitt (7a) enthält, angeordnet ist.

4. Eine Regalstruktur gemäß Anspruch 1 oder 3, **dadurch gekennzeichnet, daß** die Zentrier- und Aufnahmemittel zur Aufrechterhaltung des ersten, äußeren Abschnitt (7a) in einer vorgegebenen Position auf der Stirnkontaktfläche (30), zumindest ein Scharnierauge (31) mit verbreiterten Kopf umfaßst, der senkrecht zu der Stirnkontakffläche (30) befestigt ist und der solche Abmessungen hat, um perfekt in einem Schlitz (70), der in ersten, äußeren Abschnitt (7a) gemacht ist, aufgenommen zu werden.

5. Eine Regalstruktur gemäß Anspruch 4, **dadurch gekennzeichnet, daß** zumindest der Scharnierauge (31) einen verbreiterten Kopf (32) hat mit eine solche Abmessung, daß der Kopf mit einem Teil der Außenfläche des ersten, äußeren Abschnitt (7a), der an der Kante des Schlitzes (70) angeordnet ist, zusammenwirkt.

6. Eine Regalstruktur gemäß Anspruch 4 oder 5, **dadurch gekennzeichnet, daß** die Form des Schlitzes (50) in horizontaler Richtung verlängert.

7. Eine Regalstruktur gemäß Anspruch 5 oder 6, **dadurch gekennzeichnet, daß** Jeder der Stützpfosten (6) wird von einem Profilteil mit einer quadriert Querschnitt gebildet ist, wobei der Profilteil über einen Anhängsel oder Vorderflügel (60) an jeder von zwei gegenüberliegenden Seiten verfügt, der in Kontakt mit einem vorderen Teil der vorderen Kontaktoberfläche (30) mit diesem zusammenwirkt, und einen Anhängsel oder Vorderfiügel (61), der in Kontakt mit einem Teil der äußeren Oberfläche der Seitenwand (5) zusammenwirkt.

8. Eine Regalstruktur gemäß Anspruch 7, **dadurch gekennzeichnet, daß** die Mittel für eine stabile Verbindung des zweiten, inneren Abschnitt (7b) an dem entsprechenden Stützpfosten (6) und der Seitenwand (5) eine stabile, dicht "verpackt" Verbindung, in Form einer Schraube, jedes inneren zweiten Abschnitt (7b) mit der entsprechenden Seitenwand (5) und dem entsprechenden hinteren Flügels (61) definieren.

9. Ein System gemäß einem der vorhergehenden Ansprüche, **dadurch gekennzeichnet, daß** das Ende (7b) des zweiten, inneren Abschnitt (7b) so gefaltet ist, um einen Zugriff zu ermöglichen.

## Revendications

1. Structure de rayonnage, du type utilisé de préférence pour l'adaptation à l'intérieur de camionnettes commerciales équipés, comprenant une pluralité des éléments contenant ou des récipients (1), qui sont pourvus, dans leur partie inférieure, d'une paroi de fond (2), avec une paroi avant (3), une paroi arrière (4) et deux parois latérales opposées (5) qu'ils étendent le long du périmètre de la paroi de fond, lesdites récipients (1) étant intégralement fixé à des montants de support (6) à des hauteurs différentes, **caractérisé en ce que** au moins chaque dite paroi avant (3) a des extrémités opposées formées de manière à définir des surfaces de contact d'extrémité (30) qu'ils sont parallèles entre elles et destinées pour entrer en contact avec des parties correspondantes desdites surfaces de parois latérales opposées (5) et desdits montants de support (6); pour chacune desdites extrémités opposées, la liaison entre ledit récipient (1) et son montant de support (6) est réalisé par un étrier de jonction (7), dans lequel deux portions peuvent être définis et disposés sur deux plans différents: une première partie extérieure (7a) destiné à être placé dans une position extérieure par rapport à ladite paroi latérale (5) de manière à coopérer au moins avec la partie dudit support vertical (6) faisant face à ladite surface de contact (30) de l'extrémité relative de ladite paroi avant (3); une deuxième partie intérieure (7b) destiné à être placé dans une position interne par rapport à ladite paroi latérale (5) dans une zone dans laquelle la face extérieure de cette paroi fait face à une partie de la surface extérieure dudit montant de support (6); chaque dite paroi latérale (5) ayant une fente (50), à travers lequel ledit support de liaison (7) est destiné à être introduit librement à sa partie plié intermédiaire (7c), qui relie ladite première partie extérieure (7a) avec ledit second partie intérieure (7b); avec des moyens prévus pour la connexion stable de la deuxième partie intérieure (7b) au le montant de support (6) et à ladite paroi latérale (5) et avec des moyens de centrage et contenant visant à maintenir lesdites première, partie extérieure (7a) dans une prédéterminée position sur ladite surface de contact d'extrémité (30).

2. Structure de rayonnage selon la revendication 1, **caractérisé en ce que** ledit étrier de jonction (7) est formée d'un matériau élastiquement déformable.

3. Structure de rayonnage selon la revendication 1, **caractérisé en ce que** ladite deuxième partie intérieure (7b), destiné à être situé à l'intérieur de ladite paroi latérale (5), dans sa configuration naturelle, non assemblées, se trouve dans une position non parallèle à celle de la première, partie extérieure (7a), qui définit une inclinaison, en vertu de laquelle le point d'intersection des deux plans, définie par la première, la partie extérieure (7a) et la deuxième, partie intérieure (7b), se trouve, par rapport ladite paroi plié intermédiaire (7c), dans l'espace contenant la première, partie extérieure (7a).

4. Structure de rayonnage selon la revendication 1 ou 3, **caractérisé en ce que** lesdites moyens de centrage et contenant visant à maintenir lesdites première, partie extérieure (7a) dans une prédéterminée position sur ladite surface de contact d'extrémité (30), comprennent au moins un goujon (31) à tête élargie qui est fixée perpendiculairement à ladite surface de contact d'extrémité (30) et avec des dimensions telles à être reçue parfaitement dans une fente (70) ménagée dans ladite première portion extérieure (7a).

5. Structure de rayonnage selon la revendication 4, **caractérisé en ce que** au moins ledit goujon (31) présente une tête élargie (32) de dimension telle à interagir avec une partie de la surface extérieure de ladite première portion extérieure (7a) située au bord de ladite fente (70).

6. Structure de rayonnage selon la revendication 4 ou 5, **caractérisé en ce que** la forme de ladite fente (50) est allongée dans le sens horizontal.

7. Structure de rayonnage selon la revendication 5 ou 6, **caractérisé en ce que** chaque montant de support (6) est formé par un profilé ayant une section uniforme carré, qui comporte, à chacun de deux côtés opposés, un appendice ou aile avant (60) , destinés à interagir en contact avec une partie avant de ladite surface de contact avant (30), et un appendice ou aile arrière (61), destinés à interagir en contact avec une partie de ladite surface extérieure de la paroi latérale (5).

8. Structure de rayonnage selon la revendication 7, **caractérisé en ce que** lesdits moyens prévus pour la connexion stable de la deuxième partie intérieure (7b) au le montant de support (6) et à ladite paroi latérale (5) définissent une connexion stable, étanche et "compacte" de chaque deuxième, partie intérieure (7b) avec la paroi latérale correspondante (5) et sur le côté arrière correspondant (61), laquelle connexion est réalisée sous la forme d'une vis.

9. Structure de rayonnage selon l'une quelconque des revendications précédentes, **caractérisé en ce que** l'extrémité (7b) de ladite deuxième partie intérieure (7b) est pliée de manière à permettre la préhension.
